# EUROPEAN PATENT SPECIFICATION

(11) **EP 3 855 887 B1**
(45) Date of publication and mention of the grant of the patent: **15.04.2026**
(21) Application number: 19762800.1
(22) Date of filing: 04.09.2019
(51) Int. Cl.: A01G 9/18, A01G 7/02

(54) **A METHOD FOR INDUCTION OF PLANT GROWTH IN A GREENHOUSE**
VERFAHREN ZUR INDUKTION DES PFLANZENWACHSTUMS IN EINEM GEWÄCHSHAUS
PROCÉDÉ DE STIMULATION DE LA CROISSANCE DE PLANTES DANS UNE SERRE

(30) Priority: 28.09.2018 NL 2021736
(43) Date of publication of application: 04.08.2021
(73) Proprietor: Environmental Monitoring Systems (EMS) B.V., 4697 RZ Sint-Annaland (NL)
(72) Inventor: BOERMAN, Jan-Kees, 4697 RZ Sint-Annaland (NL); BOERMAN, Corstian, 4697RZ Sint-Annaland (NL)
(74) Representative: Arnold & Siedsma
(86) International application number: PCT/EP2019/073588
(87) International publication number: WO 2020/064285

(56) References cited:
- EP-A1- 2 622 956
- US-A1- 2005 252 215
- US-A1- 2016 101 383

## Description

The present invention relates to a method for induction of plant growth (increase in plant biomass) in a greenhouse. More specifically, the method relates to supplying NOx gas within a specific concentration range in the atmosphere of the greenhouse and maintaining the NOx concentration, thereby stimulating plant growth (including crop growth).

Given the continuous growth of the world population, the demand for food is constantly growing. To increase food production an obtain higher yields in agriculture, the promotion of crop growth has been a topic of research for decades. For example, for the production of our food is often made use of various chemicals, such as pesticides and fertilizers to ensure the quality and improve our food but also to increase the quantity of our food. However the continuous use of fertilizers and chemicals such as pesticides to improve crop yield present an increasing problem in relation to a sustainable and environmental friendly way of producing our food.

To have a year round production of fruit and vegetables, crops can be grown in a greenhouse, wherein the climate conditions, such as temperature, moisture and nutrients can be monitored and closely controlled. This ensures that the growth conditions can be optimized and crop yields are increased. To control the climate inside the greenhouse, often a heat source is used to maintain the desired temperature and climate.

Cogeneration or combined heat and power (CHP) is the use of an engine to generate electricity and useful heat at the same time. In greenhouses CHP (or burner from a boiler) are used to control the temperature inside the greenhouse by burning natural gas in the CHP. Burning of natural gas (e.g. propane and/or kerosene) in the CHP results in the production of gases, mainly CO₂, but also NOx (NO and NO₂) and ethylene (C₂H₄) gas which all have an effect on crop growth in the greenhouse. Plants can be very sensitive to atmospheric NOx concentrations, especially at high concentrations. Some species are more sensitive than others, for example tomato plants are generally more sensitive to NOx. However, not much is known about the specific interactions between plants and atmospheric NOx in relation to plant or crop growth. Furthermore, nitrogen oxides (NOₓ) are produced during heating of the greenhouses and are regarded as one of the main contributors to air pollution, namely nitric oxide (NO) and nitrogen dioxide (NO₂). These gases contribute to the formation of for instance smog and acid rain.

EP2622956A1 relates to a me hod for fumigation of crop plants using a gas mixture. More specifically, the document discloses a method that involves exposing crop plants to gas atmosphere comprising carbon dioxide (0 to 5.000 ppb) and ethylene (1 to 50 ppm) in a greenhouse. The ethylene and/or the carbon dioxide are introduced by using a gas distributor and/or using nitrogen. A gas mixture of ethylene. carbon dioxide and/or nitrogen is used for creation of gas atmosphere. The carbon dioxicle is provided in the gas atmosphere by incineration.

Considering the above, there is a need in the art for providing a method to further increase the plant growth and crop yield in greenhouses, wherein the method is more environmentally friendly and economically beneficial.

It is an object of the present invention, amongst other objects, to address the above need in the art. The object of present invention, amongst other objects, is met by the present invention as outlined in claim 1 and the dependent claims.

The method of present invention stimulates the (re-)use of waste stream already present in greenhouses i.e. the gases produced during heating of the greenhouse, to obtain a method for a more environmental friendly agriculture and in addition further promoting crop yield. The method additionally may thereby limit or reduce the need for use of chemicals such fertilizers and pesticides.

Within the NOx concentration range of at most 70 ppb, the optimal point varies with the electron transport rate (ETR). ETR is a light-adapted parameter, and relative ETR values are valuable for stress measurements when comparing one plant to another at similar or identical light absorption characteristics and environment. When plants are subjected to suboptimal growth conditions, the plants are under stress which can be measured by using ETR values. Stress factors affect plant growth, survival and crop yields. Light that stimulates photosynthesis is know as photosynthetically active radiation (PAR) and is equivalent to the visible wavelengths of the light spectrum of 400 nm to 700 nm. The ETR value is dependent on the amount of photosynthetic active radiation (PAR) light over a given time period. Higher ETR values in combination with higher NOx concentrations, results in higher sensitivity to NOx and decreasing biomass conversion, and thus decreasing yield.

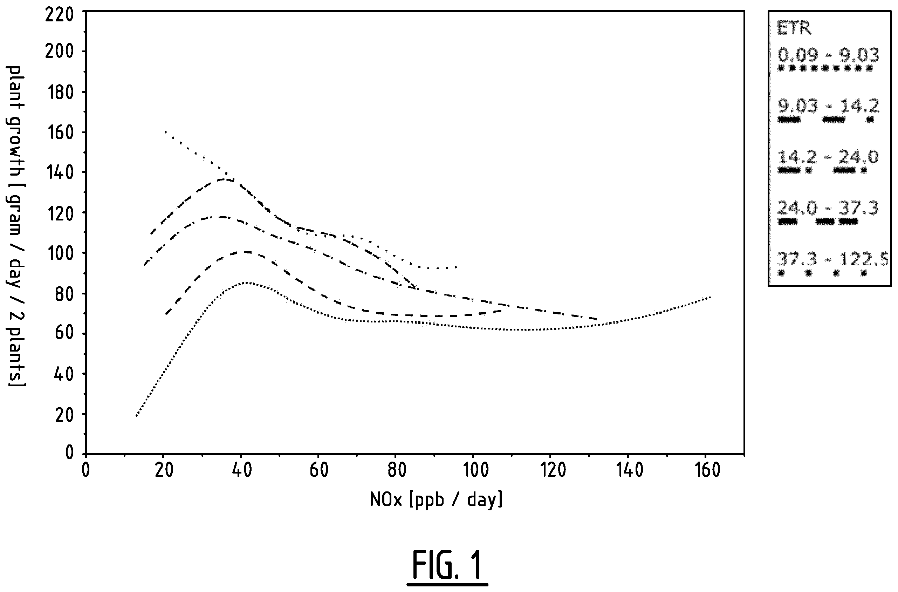

An increase in plant growth (peak values in figure 1) was detected where the NOx concentration was between 30 ppb and 45 ppb, wherein the average increase in growth was 6% per day (as measured in gram/day/m²), regardless of ETR value and therefore regardless the amount of light. No peak (increase in plant growth) was detected on the brightest days full with light due to the fact that the light was not fully being "used" at peak input by the plant, and the optimal peak (showing highest plant growth) shifts backwards under conditions having increased light, which implies NOx is more poisonous at these conditions. Based on these results it was concluded that higher amounts of PAR radiation results in higher sensitivity to NOx. Furthermore, It was determined that the average plant growth per day was at least 120 grams/day at a daily average NOx concentration within the optimal range of 30 to 45 ppb, confirming that at these specific concentrations of NOx growth of plants was positively affected.

The present invention relates to the method, wherein NOx gas is supplied and maintained at a concentration of between 15 to 65 ppb, preferably 30 to 45 ppb in the atmosphere of the greenhouse. Experiments showed that, when gently applied, specific concentrations of NOx in the atmosphere of a greenhouse will have a positive effect on plant growth (gram/day/m2). Especially at low concentrations of NOx of between 30 to 45 ppb the positive effect of NOx is most notably, and that NOx in the higher concentrations, i.e. higher than 70 ppb, will negatively affect crop growth, resulting in ETR reduction. Concentrations above 200 ppb will decrease biomass conversion, resulting in damage to the crop caused by necrosis. This is especially a risk in winter periods when windows of the greenhouse are kept closed. Optimizing NOx exposure of the plant to a concentration of between 15 to 65 ppb increases the plant growth with an average of 6% per day regardless of light, relative humidity, CO₂ concentration and temperature. It is believed that within this specific NOx concentration range the transmembrane reporters, nitrite reductase and nitric reductase are directly influenced, thereby positively affecting plant growth leading to an increase in plant biomass (e.g. plant and plant crop growth). At higher NOx concentrations the plant foliar uptake process is affected and most likely represses the expression of the Reductases and negatively affect plant growth.

It was found that crop growth / plant growth, for example tomato and tomato plants can be promoted by controlling the NOx concentration in the atmosphere inside a greenhouse. However the effect of NOx on the nitrate content and the nitrite reductase activity is strongly influenced by nutrient nitrogen level. The method of present invention will use the NOx from the atmosphere in the greenhouse to benefit the plants, especially when other forms of oxidized nitrogen are in short supply. Experiments indicated that at high NOx concentrations the photosynthetic process in the plant is inhibited and that the positive effect of CO₂ on plant growth is eliminated. High levels of NOx will lead to a reduction of growth (rate) of plants, for example tomato seedlings in a greenhouse and that the inhibition of growth would be sufficient to reduce, or even nullity the benefits of CO₂ enrichments.

According to another preferred embodiment, the present invention relates to the method wherein NOx is nitric oxide (NO) and/or nitrogen dioxide (NO₂).

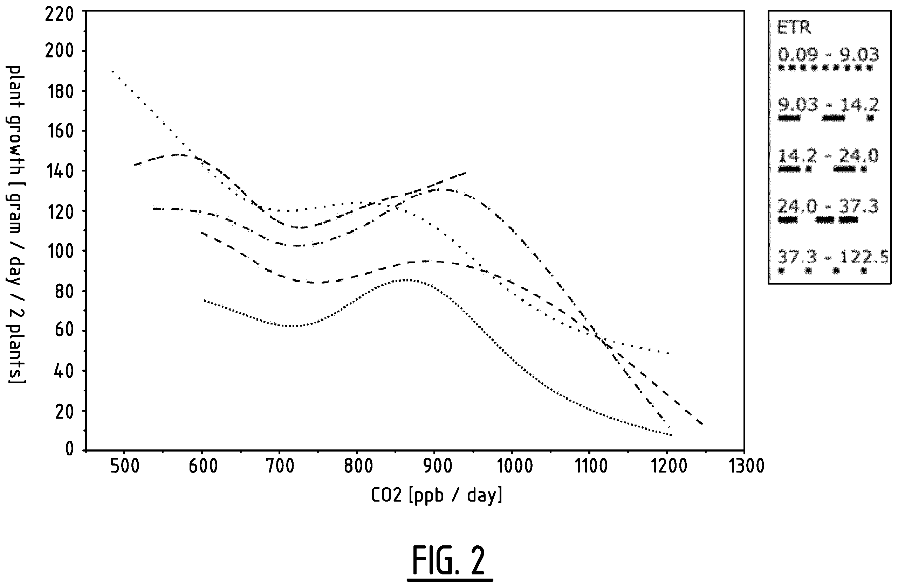

Disclosed herein is the increase in plant biomass that is not affected by light, relative humidity, CO₂ concentration and/or temperature. Experiments showed (Figure 2) that high concentrations of NOx, i.e. above 80 ppb, the NOx pollution cancelled the positive effect of CO₂ on the plant growth. Therefore, to improve plant growth it is more important to keep the average NOx concentration in the optimal range than when the CO₂ concentration is within a certain concentration range that was shown to benefit plant growth. While the NOx concentration is in a narrow band mainly between 30 ppb and 45 ppb, the CO₂ concentration range varies from 600 ppm to 1000 ppm showing there is no direct relationship by the concentration NOx and the amount of dosed CO₂. Therefore, to achieve high growth, the NOx concentration needs to be in a specific range of approximately 15 to 65 ppb, while the CO₂ concentration can vary.

According to another preferred embodiment, the present invention relates to the method wherein the atmosphere of said greenhouse is further supplied with CO₂ at a concentration of between 500 ppm to 1200 ppm, preferably 600 ppm to 1100 ppm.

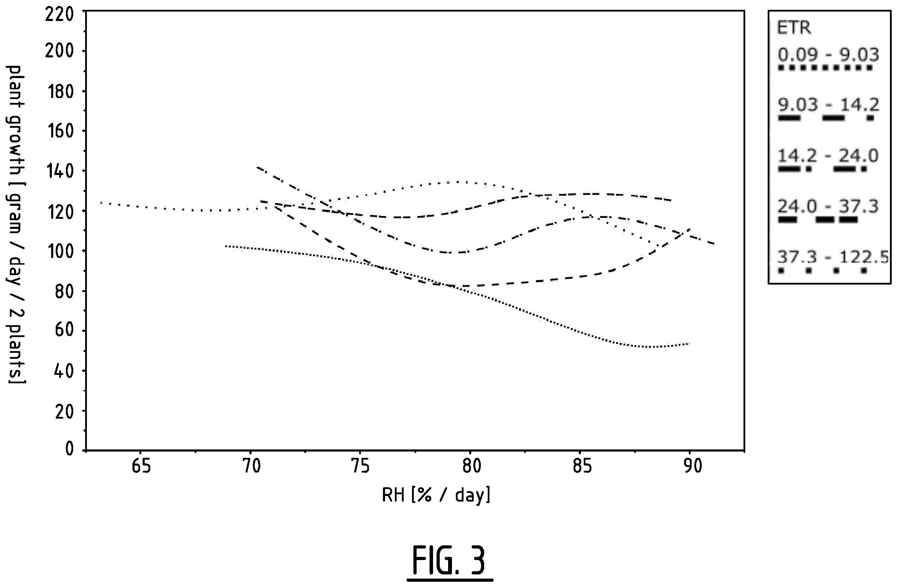

According to yet another preferred embodiment, the present invention relates to the method wherein the relative humidity in said greenhouse is between 50% to 99%, preferably 70% to 95%, more preferably between 80% to 90%, most preferably between 85% and 90%. Similar result as for CO₂ were obtained when examining the effect of the average relative humidity (RH) in relation to NOx on plant growth (See Figure 3). While the NOx concentration needs to be in a specific range of approximately 15 to 65 ppb, the range for the average relative humidity varies with a wide band from 70% to 90% RH.

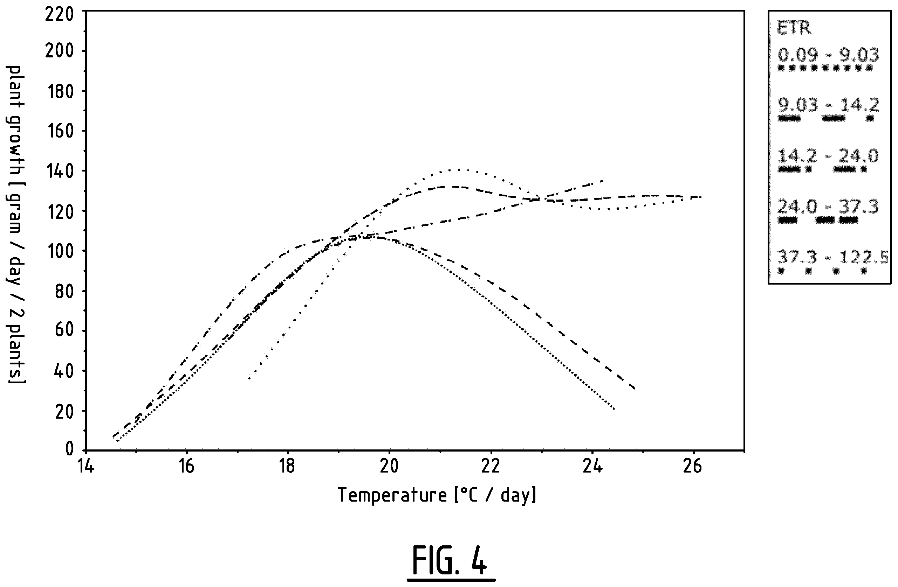

The relation between temperature and NOx concentration and the effect on plant growth was also examined. Figure 4 shows the relation of plant growth related to NOx and the growth related to temperature. The NOx concentrations with optimum growth are selected in the range of 35 to 45 ppb and shows there is no direct relationship with a specific range of temperature. This information supports that temperature and NOx are independent parameters of growth or as plant vitalization parameter.

According to a preferred embodiment, the present invention relates to the method wherein the plant is selected from the group consisting of tomato, cucumber, pepper, cannabis, lettuce, rose, and other fruits, vegetables and flower crops. The method of present invention leading to the growth promoting effect in plants can be adapted to other crops grown in greenhouses, preferably tomato plants. Tomato plants are generally more sensitive to NOx then other crops. Present invention uses the NOx as a multifunctional signal to stimulate plant growth, nutrient uptake and metabolism of the tomato plant and its fruits. NO₂ induces increases in fruit size and biomass at concentrations as low as 10 ppb, and at higher levels (≥ 200 ppb) of NO₂ will significantly inhibit plant growth.

Disclosed herein is that the increase in plant biomass comprises an increase in plant mass of at least 2% per day, preferably at least 4% per day, more preferably at least 6% per day, most preferably at least 15% per day, even most preferably at least 20% per day.

Disclosed herein is that the increase in plant biomass comprises an increase in plant mass of at least 80 gram/day, more preferably at least 120 gram/day.

The present invention will be further detailed in the following examples and figures wherein;
- **Figure 1:**: shows the correlation between plant growth, NOx levels and the ETR value. The graph shows that an increase in the ETR leads to an increase of growth. The peak visible in all ETR groupings which concentrations are between 30 ppb and 45 ppb NOx shows an average increase in growth of 6% per day regardless of ETR value and therefore regardless the amount of light. The optimal peak shifts backwards which implies NOx is more poisonous at lighter days.
- **Figure 2:**: shows the correlation between plant growth, CO₂ levels and the ETR value. In relation to the NOx results, more growth is achieved by keeping a specific concentration range of NOx in the range between 30 to 45 ppb, then when the CO₂ is kept at a specific concentration range. The data shows that it is more important that the NOx concentration is kept in this specific range than the CO₂ concentration and that extra injected CO₂ is due to the high NOx concentrations cancelled and not effective, as is indicated by a drop in the growth curve at higher CO₂ concentrations (i.e. above 1.000 ppm). Thus, more growth will be achieved when NOx is maintained at a certain concentration range and not by injecting higher CO₂ concentrations.
- **Figure 3:**: shows the correlation between plant growth, relative humidity levels and the ETR value. In relation to the NOx results, the graph shows that with optimum growth between 30 to 45 ppb NOx concentrations, the relative humidity (RH) within the ranges 70 to 90% seems to have no direct relationship on growth. This confirms that RH and NOx are independent parameters as respectively plant growth parameter.
- **Figure 4:**: shows the correlation between plant growth, temperature levels and the ETR value. In relation to the NOx results, as was observed for RH, the graph shows that with optimum growth between 30 to 45 ppb NOx concentrations, the different specific temperatures seems to have no direct relationship on growth. This confirms that temperature and NOx are independent parameters as respectively plant growth parameter.

### Example 1

The following example describes how the growth increase or growth decrease in tomatoes in greenhouses are measured and analysed. The specific tomato cultivars in this practice test are Brioso and Sunstream. The results are based on (day)light averages for NOx, CO₂ and relative humidity. The plant growth is the total growth achieved in a 24-hour cycle from 0:00 to 24:00.

In a tomato greenhouse the following sensors are placed inside the greenhouse and the collected sensor data from the greenhouse was put in a database. Inside the greenhouse a Greenhouse Gas Analyser was placed measuring NO (nitric oxide), NO₂ (nitrogen dioxide), and CO₂ (carbon dioxide). Furthermore photosynthesis and PAR measurements were performed on the tomato crop. PAR is being measured using a photosynthetically active radiation measurement sensor (i.e. photosynthesis system), in µmol m-2 s-1. From the PAR measurements the ETR (Electron Transport) is calculated. The ETR is calculated according the formula ETR = Y(II) * PAR * 0.84 * 0.5, wherein Y(II) is an indication of the amount of energy used in photochemistry under steady-state photosynthetic lighting conditions. The Y(II) value is measured as output on the photosynthesis meter.

Weighing systems were placed under and/or above the crops, which measure the increase in plant growth and determine the total increase of biomass. Additional sensors are installed inside the greenhouse to measure temperature and relative humidity.

Data was collected over a period from May 2015 to Aug 2017, obtaining at least data from 500 days. All data is correlated as shown in the Figures 1 to 4 and calculated to the following averages:
- Growth in gram/day is a 24h average due to production of accimilates.
- ETR is a daylight average due to the relation of growth by photosynthesis. The ETR values are divided in 5 equal groups of data amounts representing the distribution of the ETR value across different ranges:
   1) 0-20 % amount of datapoints representing the lowest ETR values (0,09 - 9,03 ETR).
   2) 21-40% amount of datapoints (9,03 - 14,23 ETR)
   3) 41-60% amount of datapoints (14,23 - 24,03 ETR)
   4) 61-80% amount of datapoints (24,03 - 37,33 ETR)
   5) 81-100% amount of datapoints representing the highest ETR values (37,33 - 122,58 ETR).
- NOx concentration in ppb is a daylight average acting as a plant vitalization effect parameter on the relation of growth by photosynthesis (Figure 1).
- CO₂ in ppm is a daylight average due to the relation of growth by photosynthesis (Figure 2).
- Relative humidity in % RH is a daylight average due to the relation of growth by photosynthesis (Figure 3).
- Temperature is a 24h average due to production of accimilates (Figure 4).

NOx will have a positive effect on tomato growth at low concentrations of NOx and meanwhile NOx in the higher concentrations will negatively affect tomato crop, resulting in ETR reduction. The positive effect of NOx is most notably an average daylight NOx concentration between 30 pbb and 45 ppb. Within this range the optimal point varies with the electron transport rate (ETR). The ETR value is dependent on the amount of photosynthetic active radiation (PAR) light over a given time period. Results show that higher ETR values in combination with higher NOx concentrations, results in higher sensitivity to NOx and decreasing biomass conversion, and thus decreasing yield.

## Claims

1. Method for induction of increase in plant biomass in a greenhouse, **characterized in that** said increase in plant biomass is stimulated by supplying NOx gas at a concentration of between 15 to 65 ppb, preferably 30 to 45 ppb in the atmosphere of said greenhouse and maintaining said NOx concentration for at least 1 day, preferably for at least 2 days, most preferably for at least 3 days.

2. Method according to claim 1, wherein NOx is nitric oxide (NO) and/or nitrogen dioxide (NO₂).

3. Method according to any of the preceding claims, wherein the atmosphere of said greenhouse is further supplied with CO₂ at a concentration of between 500 ppm to 1200 ppm, preferably 600 ppm to 1100 ppm.

4. Method according to any of the preceding claims, wherein the relative humidity in said greenhouse is between 50% to 99%, preferably 70% to 95%, more preferably 80% to 90%.

5. Method according to any of the preceding claims, wherein said plant is selected from the group consisting of tomato, cucumber, pepper, cannabis, lettuce, rose, and other fruits, vegetables and flower crops.

6. Method according to any of the preceding claims, wherein said plant is a tomato plant.

## Patentansprüche

1. Verfahren für eine Induktion einer Erhöhung einer Pflanzenbiomasse in einem Gewächshaus, **dadurch gekennzeichnet, dass** die Erhöhung der Pflanzenbiomasse durch ein Einspeisen von NOx-Gas in einer Konzentration zwischen 15 bis 65 ppb, vorzugsweise 30 bis 45 ppb in die Atmosphäre des Gewächshauses und ein Aufrechterhalten der NOx-Konzentration für mindestens 1 Tag, vorzugsweise für mindestens 2 Tage, am meisten bevorzugt für mindestens 3 Tage stimuliert wird.

2. Verfahren nach Anspruch 1, wobei NOx Stickstoffmonoxid (NO) und/oder Stickstoffdioxid (NO₂) ist.

3. Verfahren nach einem der vorstehenden Ansprüche, wobei die Atmosphäre des Gewächshauses ferner mit CO₂ in einer Konzentration zwischen 500 ppm bis 1200 ppm, vorzugsweise 600 ppm bis 1100 ppm versorgt wird.

4. Verfahren nach einem der vorstehenden Ansprüche, wobei die relative Luftfeuchtigkeit in dem Gewächshaus zwischen 50 % bis 99 %, vorzugsweise 70 % bis 95 %, mehr bevorzugt 80 % bis 90 % beträgt.

5. Verfahren nach einem der vorstehenden Ansprüche, wobei die Pflanze aus der Gruppe ausgewählt ist, bestehend aus Tomate, Gurke, Paprika, Cannabis, Salat, Rose und anderen Früchten, Gemüsepflanzen und Blumenkulturen.

6. Verfahren nach einem der vorstehenden Ansprüche, wobei die Pflanze eine Tomatenpflanze ist.

## Revendications

1. Procédé d'induction d'une augmentation de la biomasse végétale dans une serre, **caractérisé en ce que** ladite augmentation de la biomasse végétale est stimulée par la fourniture de gaz NOx à une concentration comprise entre 15 et 65 ppb, de préférence 30 à 45 ppb dans l'atmosphère de ladite serre et le maintien de ladite concentration de NOx pendant au moins 1 jour, de préférence pendant au moins 2 jours, le plus préférablement pendant au moins 3 jours.

2. Procédé selon la revendication 1, dans lequel NOx est le monoxyde d'azote (NO) et/ou le dioxyde d'azote (NO₂).

3. Procédé selon l'une quelconque des revendications précédentes, dans lequel l'atmosphère de ladite serre est en outre alimentée en CO₂ à une concentration comprise entre 500 ppm et 1200 ppm, de préférence 600 ppm à 1100 ppm.

4. Procédé selon l'une quelconque des revendications précédentes, dans lequel l'humidité relative dans ladite serre est comprise entre 50 % et 99 %, de préférence entre 70 % et 95 %, plus préférablement entre 80 % et 90 %.

5. Procédé selon l'une quelconque des revendications précédentes, dans lequel ladite plante est choisie dans le groupe constitué de tomate, concombre, poivron, cannabis, laitue, rose, et d'autres cultures de fruits, de légumes et de fleurs.

6. Procédé selon l'une quelconque des revendications précédentes, dans lequel ladite plante est une plante de tomate.
